# EUROPEAN PATENT APPLICATION

(11) **EP 2 949 502 A1**
(43) Date of publication of application: **02.12.2015**
(21) Application number: 13872800.1
(22) Date of filing: 05.09.2013
(51) Int. Cl.: B60L 15/20, B60L 3/00, B60L 7/14, B60L 11/18

(54) **METHOD FOR LIMITING VEHICLE SPEED AT TIME OF EVASIVE TRAVEL, AND VEHICLE**

(30) Priority: 28.01.2013 JP 2013013238
(71) Applicant: Kabushiki Kaisha Toyota Jidoshokki, Kariya-shi, Aichi 448-8671 (JP)
(72) Inventor: NOMURA, Hiroyuki, Kariya-shi Aichi 448-8671 (JP); MATSUI, Tadasumi, Kariya-shi Aichi 448-8671 (JP); NISHIGAKI, Kenji, Kariya-shi Aichi 448-8671 (JP); KIDONO, Masashi, Kariya-shi Aichi 448-8671 (JP); TSUZUKU, Takahiro, Kariya-shi Aichi 448-8671 (JP); YOSHIZAWA, Hiromasa, Kariya-shi Aichi 448-8671 (JP)
(74) Representative: Winter, Brandl, Fürniss, Hübner, Röss, Kaiser, Polte - Partnerschaft mbB
(86) International application number: PCT/JP2013/073955
(87) International publication number: WO 2014/115365

(57) **Abstract**

The present invention relates to a vehicle and a method of limiting a vehicle speed during evacuation running. The invention prevents a normal battery block from being overcharged by regenerative electric power during evacuation running, in which a vehicle driven by a parallely connected battery blocks runs under a condition in which some abnormal battery blocks are separated. The method includes: step S1 for determining whether a vehicle is performing evacuation running in which the vehicle runs under a condition in which some of a plurality of parallely connected battery blocks are separated; step S2 for, in the case of evacuation running, calculating receivable regenerative electric power for the battery blocks used for running of the vehicle; step S3 for calculating a limit speed of the vehicle according to the receivable regenerative electric power, in a manner such that regenerative electric power generated when the vehicle is braked does not exceed the receivable regenerative electric power; and step S4 for limiting the speed of the vehicle to the limit speed or to a speed lower than the limit speed.

## Description

### Technical Field

The present invention relates to a vehicle and a method of limiting a vehicle speed during evacuation running in which, when an abnormality occurs in a battery of a vehicle driven by a plurality of batteries, the vehicle runs under a condition in which the abnormal battery is separated.

### Background Art

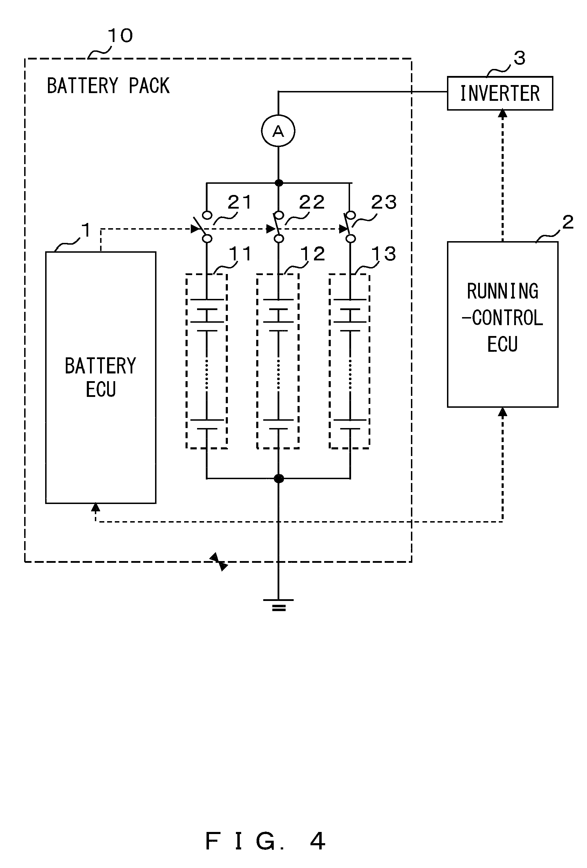

Battery-driven vehicles such as forklifts, EVs, HVs, and PHVs include a battery pack 10 in which a plurality of battery blocks 11, 12, and 13 are connected in parallel, as depicted in FIG. 4. The battery pack 10 supplies a driving current to a motor (not illustrated) via an inverter 3 and causes a vehicle (not illustrated) to run. When a vehicle is braked, regenerative electric power is supplied from a motor (generator) to the battery pack 10 via the inverter 3, thereby charging the batteries within the battery pack 10.

Each of the battery blocks 11, 12, and 13 within the battery pack 10 may consist of a single battery cell or may consist of a plurality of battery cells serially or parallely connected to each other. The battery pack 10 has a battery Electric Control Unit (ECU) 1 provided therein. The battery electric control unit (ECU) 1 has functions for sensing the voltages, currents, temperatures, and the like of the individual battery cells of the battery blocks 11, 12, and 13 and for performing monitoring and controlling using various types of operation means and determining means in such a manner as to properly deal with the charging and discharging of each battery cell and an abnormality therein.

The battery electric control unit (ECU) 1 may communicate monitoring control information with a running-control electric control unit (ECU) 2 that controls the running of the vehicle, and may control the vehicle for proper running in cooperation with the running-control electric control unit (ECU) 2.

The running-control electric control unit (ECU) 2 communicates monitoring control information with the battery electric control unit (ECU) 1, and drives the motor and controls the running of the vehicle by controlling the inverter 3 in accordance of the state of the batteries of the battery pack 10.

As depicted in FIG. 4, the battery blocks 11, 12, and 13 are connected in parallel to each other via switches 21, 22, and 23. In the battery pack 10 configured in such a manner, when an abnormality occurs in a certain battery block, e.g., the battery block 11, the battery electric control unit (ECU) 1 separates the battery block 11 in which the abnormality has occurred using the switch 21.

Even when the abnormal battery block 11 is separated, power fed from the normal battery blocks 12 and 13 connected in parallel to each other can cause the vehicle to run and move to an evacuation site, a safe area, or the like. Causing a vehicle to run under a condition in which some of the battery blocks are separated is called evacuation running. Patent literature 1 below discloses a technology for performing evacuation running in which an abnormal battery is separated to perform drive torque limitation control for a motor.

Patent literature 2 below discloses a technology wherein, for a battery used for causing a vehicle to run, receivable regenerative electric power is calculated that does not lead to overcharge of the battery due to a regenerative current generated when the vehicle is braked, and a target drive torque of the vehicle is determined according to the value of the calculated regenerative electric power.

### Citation List

### Patent Literature

Patent literature 1: Japanese Laid-open Patent Publication No. 2012-50158
Patent literature 2: Japanese Laid-open Patent Publication No. 2008-296896

### Summary of Invention

### Technical Problem

In a battery pack in which battery blocks are connected in parallel to each other, even when an abnormality occurs in some of the battery blocks, a vehicle can perform evacuation running using normal battery blocks while separating the abnormal battery blocks. However, separating the abnormal battery blocks vastly decreases the number of battery cells within the entirety of the battery pack.

Accordingly, regenerative electric power that the battery blocks used for evacuation running of the vehicle can receive becomes small, and hence the battery cells within the battery blocks readily fall into an overcharged state due to a regenerative current.

In view of the problem above, an object of the present invention is to prevent the battery cells of a normal battery block from being overcharged by regenerative electric power during evacuation running in which a vehicle driven by a parallely connected battery blocks runs under a condition in which abnormal battery blocks are separated.

### Solution to Problem

A method of limiting a vehicle speed during evacuation running in accordance with the invention includes: a regenerative-electric-power calculating step of calculating, in causing a vehicle to run under a condition in which some of a plurality of parallely connected battery blocks are separated, regenerative electric power that a decreased number of battery blocks remaining after the separation is capable of receiving; a limit speed calculating step of calculating a limit speed of the vehicle according to the receivable regenerative electric power calculated in the regenerative-electric-power calculating step, in a manner such that regenerative electric power generated when the vehicle is braked does not exceed the receivable regenerative electric power; and a vehicle speed limiting step of limiting the speed of the vehicle to the limit speed calculated in the limit speed calculating step or to a speed lower than the limit speed.

The regenerative-electric-power calculating step includes storing in advance, for each different temperature, a map indicating a correlation between the receivable power and the state of charge of the battery blocks, and referring to the map according to the state of charge and temperature of a battery block used for the running of the vehicle so as to calculate regenerative electric power that the battery block used for the running of the vehicle is capable of receiving.

The limit speed calculating step includes converting the receivable regenerative electric power into kinetic energy of the vehicle, and calculating, as the limit speed, a vehicle speed that does not exceed the kinetic energy.

A vehicle in accordance with the invention runs using a motor driven by a plurality of parallely connected battery blocks and includes: a running determining unit that determines whether the vehicle is performing evacuation running in which the vehicle runs under a condition in which some of the plurality of parallely connected battery blocks are separated; a regenerative-electric-power calculating unit that calculates regenerative electric power that a decreased number of battery blocks remaining after the separation in the evacuation running is capable of receiving; and a limit speed calculating unit that calculates a limit speed of the vehicle in a manner such that regenerative electric power generated when the vehicle is braked becomes the receivable regenerative electric power or power less than the receivable regenerative electric power; and a speed limit imposing unit that controls an inverter for driving the motor that causes the vehicle to run, in a manner such that the speed of the vehicle becomes the limit speed calculated by the limit speed calculating unit or a speed that is lower than the limit speed.

### Advantageous Effects of Invention

According to the invention, during evacuation running in which a vehicle runs under a condition in which abnormal battery blocks are separated, the speed of the vehicle is limited in a manner such that generated regenerative electric power becomes regenerative electric power that a decreased number of battery blocks remaining after the separation is capable of receiving, or a speed lower than the regenerative electric power. Such a configuration allows battery blocks in use to be prevented from being overcharged due to separation of battery blocks.

### Brief Description of Drawings

FIG. 1 is a flowchart of limiting a vehicle speed during evacuation running in accordance with the invention;
FIG. 2 illustrates a map for correlations between state of charge of a battery and receivable power;
FIG. 3 illustrates the functional block configuration of limiting a vehicle speed during evacuation running in accordance with the invention; and
FIG. 4 illustrates an exemplary configuration of a battery pack of a vehicle.

### Description of Embodiments

When a certain battery cell within a battery block falls into some abnormal state in a vehicle that runs using a motor driven by a battery pack of parallely connected battery blocks, evacuation running is performed by separating the battery block. In this case, however, the decrease in the number of battery blocks leads to a remarkable decrease in the number of battery cells of the entirety of the battery pack, thereby decreasing receivable regenerative electric power, i.e., electric power such that the battery cells of the battery pack are not overcharged by a regenerative current generated by the motor when the vehicle is braked. Accordingly, the present invention prevents battery cells from being overcharged by limiting the speed of the vehicle during evacuation running to the extent that only receivable regenerative electric power is generated.

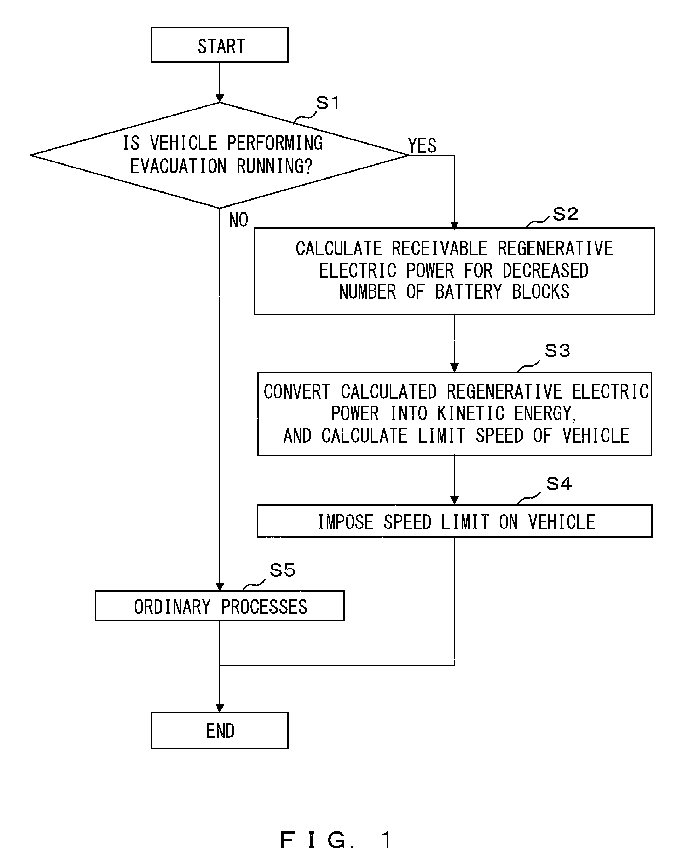

FIG. 1 illustrates the flow of limiting a vehicle speed during evacuation running in accordance with the invention. As depicted in FIG. 1, a battery electric control unit (ECU) determines whether the current running state of a vehicle is evacuation running in which the vehicle runs under a condition in which some of the battery blocks are separated (step S1). In the case of evacuation running (YES in step S1), the battery electric control unit (ECU) notifies the driver of the vehicle of the fact that the vehicle is performing evacuation running, and calculates receivable regenerative electric power for the number of battery blocks that has been decreased due to the separation (step S2).

The battery electric control unit (ECU) converts the calculated receivable regenerative electric power into kinetic energy, and calculates a vehicle speed that does not exceed the kinetic energy as a limit speed (step S3). The battery electric control unit (ECU) reports the limit speed to a running-control electric control unit (ECU). The running-control electric control unit (ECU) imposes a speed limit on the vehicle in accordance with the limit speed (step S4).

When it is determined in step S1 described above that the vehicle is not performing evacuation running (NO), the battery electric control unit (ECU) and the running-control electric control unit (ECU) perform ordinary processes (step S5).

Instead of performing steps S2-3 of the flow, a map indicating relationships between the number of battery blocks and limit speeds may be stored in advance, and the map may be referred to so as to calculate a limit speed from a decreased number of battery blocks.

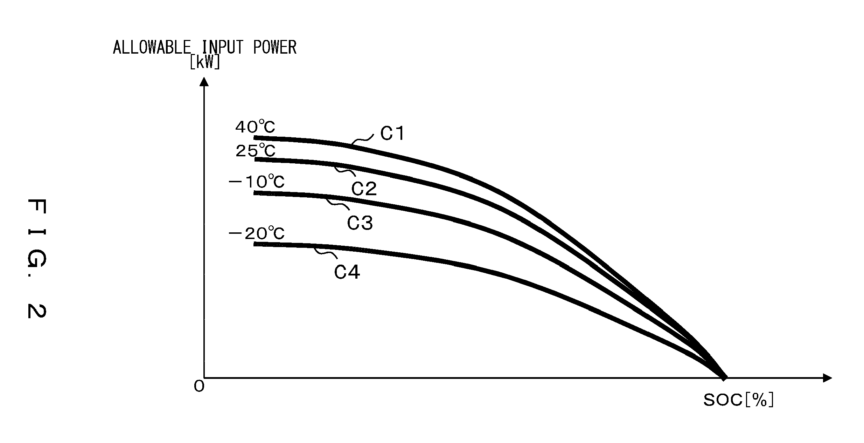

The following will describe a method of calculating regenerative electric power that a battery is capable of receiving. Power that a battery is capable of receiving (allowable input power) depends on the temperature of the battery and a state of charge (SOC) that is the ratio of the remaining capacity of the battery relative to the full charge capacity thereof. FIG. 2 depicts, for each different temperature, a correlation between state of charge of a battery and power that the battery is capable of receiving (allowable input power).

In FIG. 2, curves C1, C2, C3, and C4 represent exemplary correlations between the state of charge (SOC) of the battery and power that the battery is capable of receiving (allowable input power) when a battery temperature is 40 degrees C, 25 degrees C, -10 degrees C, and -20 degrees C, respectively.

A map as depicted in FIG. 2 indicating, for each different temperature, a correlation between a state of charge (SOC) and receivable power (allowable input power) is prepared in advance and stored in a battery electric control unit (ECU). The battery electric control unit (ECU) measures the state of charge (SOC) and temperature of each battery block or battery cell within a battery pack, and refers to the map with reference to the measured state of charge (SOC) and temperature so as to calculate receivable regenerative electric power for the entirety of the battery pack.

When some of parallely connected battery blocks within the battery pack are separated, the receivable regenerative electric power for the entirety of the battery pack is multiplied by {(total number of battery blocks - number of separated battery blocks) ÷ total number of battery blocks}, so as to calculate regenerative electric power that a decreased number of battery blocks remaining after the separation (the batter blocks other than the separated battery blocks) is capable of receiving.

The following will describe a method of calculating a limit speed of a vehicle from receivable regenerative electric power. Regenerative electric power generated per unit time depends on the power generation capacity of a motor (generator) of a vehicle and the speed thereof. Accordingly, in accordance with the power generation capacity of the motor (generator) and an equation of motion of vehicle speed, receivable regenerative electric power is converted into kinetic energy, and a vehicle speed that does not exceed the kinetic energy is calculated as a limit speed. The calculation may be performed by either of the battery electric control unit (ECU) or the running-control electric control unit (ECU).

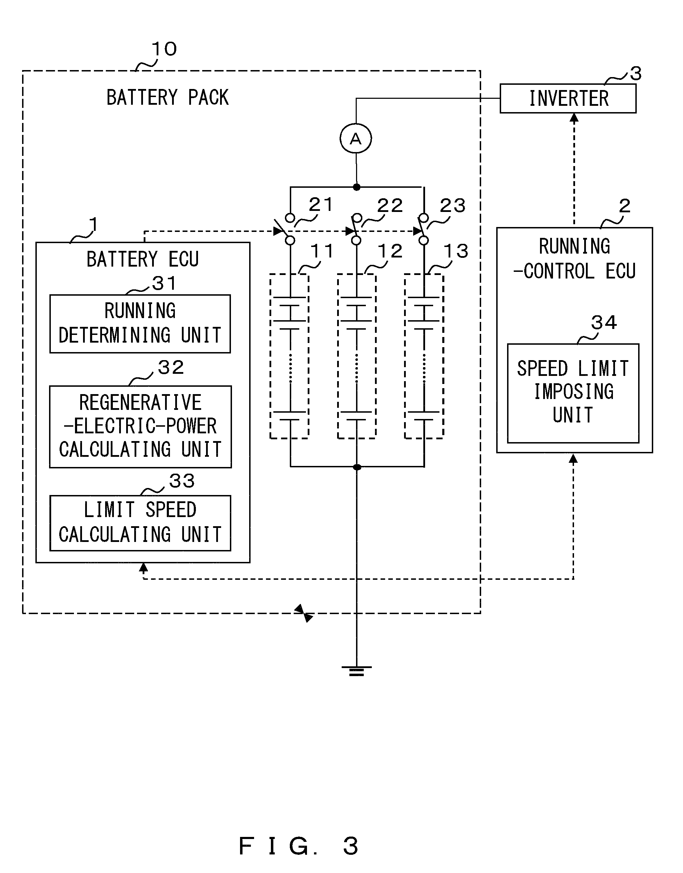

FIG. 3 illustrates the functional block configuration of a vehicle whose speed is limited during evacuation running in accordance with the invention. As depicted in FIG. 3, a battery electric control unit (ECU) 1 includes a running determining unit 31, a regenerative-electric-power calculating unit 32, and a limit speed calculating unit 33. A running-control electric control unit (ECU) 2 includes a speed limit imposing unit 34.

The running determining unit 31 determines whether the current running state of a vehicle is evacuation running in which the vehicle runs under a condition in which some of the battery blocks are separated. The regenerative-electric-power calculating unit 32 calculates receivable regenerative electric power that a decreased number of battery blocks remaining after some of the battery blocks are separated during evacuation running are capable of receiving such that the remaining battery blocks are not overcharged.

The limit speed calculating unit 33 converts the calculated receivable regenerative electric power into kinetic energy, calculates a vehicle speed that does not exceed the kinetic energy as a limit speed, and reports the limit speed to the speed limit imposing unit 34. The speed limit imposing unit 34 controls the inverter 3 so as to control the vehicle speed in accordance with the reported limit speed.

The limitation of regenerative electric power is necessary during evacuation running performed when an abnormality occurs in a battery due to, for example, overcharge or over-discharge of the battery, evacuation running performed when a communication abnormality associated with the battery electric control unit (ECU) occurs, evacuation running performed when an abnormality occurs in a battery control system, including various sensors within the battery pack, and the like.

Embodiments of the present invention have been described, but the invention is not limited to the embodiments described above. Various configurations or embodiments may be used without departing from the gist of the invention. For example, although FIG. 3 depicts an embodiment in which the limit speed calculating unit 33 is provided within the battery electric control unit (ECU) 1, the limit speed calculating unit 33 may be provided within the running-control electric control unit (ECU) 2.

Receivable regenerative electric power is not limited to an amount of power that does not overcharge a battery block used for evacuation running of a vehicle, but may be an amount of power such that an abnormality does not occur in a circuit (e.g., monitoring circuit) provided at each battery block or an amount of power such that a fuse blowout is prevented from occurring. This may prevent a large current from flowing through the battery blocks, so that a circuit abnormality and a fuse blowout can be prevented from occurring.

### Explanation of the Codes

- 1: Battery electric control unit (ECU)
- 2: Running-control electric control unit (ECU)
- 3: Inverter
- 10: Battery pack
- 11: Battery block
- 12: Battery block
- 13: Battery block
- 21: Switch
- 22: Switch
- 23: Switch
- 31: Running determining unit
- 32: Regenerative-electric-power calculating unit
- 33: Limit speed calculating unit
- 34: Speed limit imposing unit

## Claims

1. A method of limiting a vehicle speed during evacuation running, the method comprising:
a regenerative-electric-power calculating step of calculating, in causing a vehicle to run under a condition in which some of a plurality of parallely connected battery blocks are separated, regenerative electric power that a decreased number of battery blocks remaining after the separation is capable of receiving;
a limit speed calculating step of calculating a limit speed of the vehicle according to the receivable regenerative electric power calculated in the regenerative-electric-power calculating step, in a manner such that regenerative electric power generated when the vehicle is braked does not exceed the receivable regenerative electric power; and
a vehicle speed limiting step of limiting the speed of the vehicle to the limit speed calculated in the limit speed calculating step or to a speed lower than the limit speed.

2. The method of limiting the vehicle speed during evacuation running according to claim 1, wherein
the regenerative-electric-power calculating step includes storing in advance, for each different temperature, a map indicating a correlation between the receivable power and a state of charge of the battery blocks, and referring to the map according to a state of charge and temperature of a battery block used for running of the vehicle so as to calculate regenerative electric power that the battery block used for running of the vehicle is capable of receiving.

3. The method of limiting the vehicle speed during evacuation running according to claim 1 or 2, wherein
the limit speed calculating step includes converting the receivable regenerative electric power into kinetic energy of the vehicle, and calculating, as a vehicle limit speed, a vehicle speed that does not exceed the kinetic energy.

4. A vehicle that runs using a motor driven by a plurality of parallely connected battery blocks, the vehicle comprising:
a running determining unit to determine whether the vehicle is performing evacuation running in which the vehicle runs under a condition in which some of the plurality of parallely connected battery blocks are separated;
a regenerative-electric-power calculating unit to calculate regenerative electric power that a decreased number of battery blocks remaining after the separation in the evacuation running is capable of receiving;
a limit speed calculating unit to calculate a limit speed of the vehicle in a manner such that regenerative electric power generated when the vehicle is braked becomes the receivable regenerative electric power or power less than the receivable regenerative electric power; and
a speed limit imposing unit to control an inverter for driving the motor that causes the vehicle to run, in a manner such that the speed of the vehicle becomes the limit speed calculated by the limit speed calculating unit or a speed that is lower than the limit speed.
